# EUROPEAN PATENT SPECIFICATION

(11) **EP 4 545 193 B1**
(45) Date of publication and mention of the grant of the patent: **13.05.2026**
(21) Application number: 24208107.3
(22) Date of filing: 22.10.2024
(51) Int. Cl.: B06B 1/04, G06F 3/01, H02K 33/16

(54) **VIBRATION ACTUATOR AND CONTACT-TYPE INPUT DEVICE**
VIBRATIONSAKTUATOR UND KONTAKTEINGABEVORRICHTUNG
ACTIONNEUR DE VIBRATION ET DISPOSITIF D'ENTRÉE DE TYPE À CONTACT

(30) Priority: 27.10.2023 JP 2023184686
(43) Date of publication of application: 30.04.2025
(73) Proprietor: Minebea Mitsumi Inc., Kitasaku-gun, Nagano 3890293 (JP)
(72) Inventor: SAKAGUCHI, Kazutaka, Tokyo, 206-8567 (JP); ISHITANI, Tomoya, Tokyo, 206-8567 (JP); TAKAHASHI, Yuki, Tokyo, 206-8567 (JP)
(74) Representative: Epping - Hermann - Fischer

(56) References cited:
- US-A1- 2019 151 895
- US-A1- 2020 136 488
- US-A1- 2022 103 052

## Description

### Technical Field

The present invention relates to a vibration actuator and a contact-type input device including the same.

### Background Art

Conventionally, an apparatus is known which uses a vibration actuator for applying vibration as a contact operation feeling (a sense of contact and operation) to the finger pad of an operator who is in contact with an operation surface such as a touchpad (PTL 1).

PTL 1 discloses a module including a movable plate provided with an operation surface of a touchpad on one surface, a support member including a facing portion facing the other surface of the movable plate, a damper member connecting the movable plate with the support member, and an actuator that vibrates the movable plate. In the module, the actuator includes a coil and a magnet that face each other, one of the coil and the magnet is fixed to the other surface of the movable plate, and the other one of the coil and the magnet is fixed to the facing portion of the support member. PTL 2, PTL3 and PTL 4 describe further examples of vibration actuators and devices.

### Citation List

### Patent Literature

PTL 1
   Japanese Patent Application Laid-Open No. 2020-067869
PTL 2
   US Patent Application Laid-Open No. 2022/0103052 A1
PTL 3
   US Patent Application Laid-Open No. 2019/0151895 A1
PTL 4
   US Patent Application Laid-Open No. 2020/0136488 A1

### Summary of Invention

### Technical Problem

In the module disclosed in PTL 1, one of the coil and the magnet is fixed to the other surface of the movable plate, and the other one of the coil and the magnet is fixed to the facing portion of the support member. In PTL 1, miniaturization of the module is required, but when the module is miniaturized, the mountability of the coil and the magnet deteriorates, and satisfactory haptic feeling may not be obtained due to problems such as the positions at which the coil and the magnet are mounted.

An object of the present invention is to provide a vibration actuator and a contact-type input device each capable of improving mountability and obtaining a satisfactory haptic feeling.

### Solution to Problem

In order to achieve the above object, a vibration actuator according to the present invention is described in the appended claim 1.

In order to achieve the above object, a contact-type input device according to the present invention is a contact-type input device in which the above-described vibration actuator is disposed on a back surface of an operation surface of the contact-type input device, the contact-type input device including: a control part that, in response to a contact operation of an operator on the operation surface, causes the coil to be energized to vibrate the movable part and present a haptic feeling to the operator.

### Advantageous Effects of Invention

According to the present invention, it is possible to improve mountability and obtain a satisfactory haptic feeling.

### Brief Description of Drawings

FIG. 1 is an external perspective view of a vibration actuator according to an embodiment of the present invention;
FIG. 2 is an external side view of the vibration actuator illustrated in FIG. 1;
FIG. 3 is an exploded perspective view of the vibration actuator illustrated in FIG. 1;
FIG. 4 is a top view of the vibration actuator illustrated in FIG. 1, illustrating a configuration in which a cover and a weight are removed from the vibration actuator;
FIG. 5 is a bottom view of the vibration actuator illustrated in FIG. 1, illustrating a configuration in which a magnetic base is removed from the vibration actuator;
FIG. 6A illustrates the behavior of an actuator main body, illustrating a non-excitation state;
FIG. 6B illustrates the behavior of the actuator main body, illustrating an excitation state;
FIG. 7 illustrates an example of a drive circuit that drives the actuator main body;
FIG. 8 illustrates an example of the voltage supplied from the drive circuit illustrated in FIG. 7 to the actuator main body;
FIG. 9 illustrates an example of a contact-type input device including the vibration actuator illustrated in FIG. 1;
FIG. 10 is an exploded perspective view of a vibration actuator according to a variation (variation 1) of the vibration actuator illustrated in FIGS. 1 to 5;
FIG. 11 is a top view of the vibration actuator illustrated in FIG. 10, illustrating a configuration in which a cover and a weight are removed from the vibration actuator; and
FIG. 12 is a bottom view of the vibration actuator illustrated in FIG. 10, illustrating a configuration in which a magnetic base is removed from the vibration actuator.

### Description of Embodiments

Hereinafter, an embodiment according to the present invention will be described in detail with reference to the drawings.

An orthogonal coordinate system (X, Y, Z) is used for the description in the present embodiment. The orthogonal coordinate system (X, Y, Z) is used commonly in the drawings described below. In the following, the width direction, the depth direction, and the height direction (thickness direction) of below-described vibration actuators 10A and 10B and contact-type input device 100 are referred to as the X direction, the Y direction, and the Z direction, respectively.

Further, in the present embodiment, the positive side in Z-direction is described as the upper side (or the front surface side) and the negative side in Z-direction is described as the lower side (or the back surface side) in vibration actuators 10A and 10B and contact-type input device 100.

### [Configuration of Vibration Actuator]

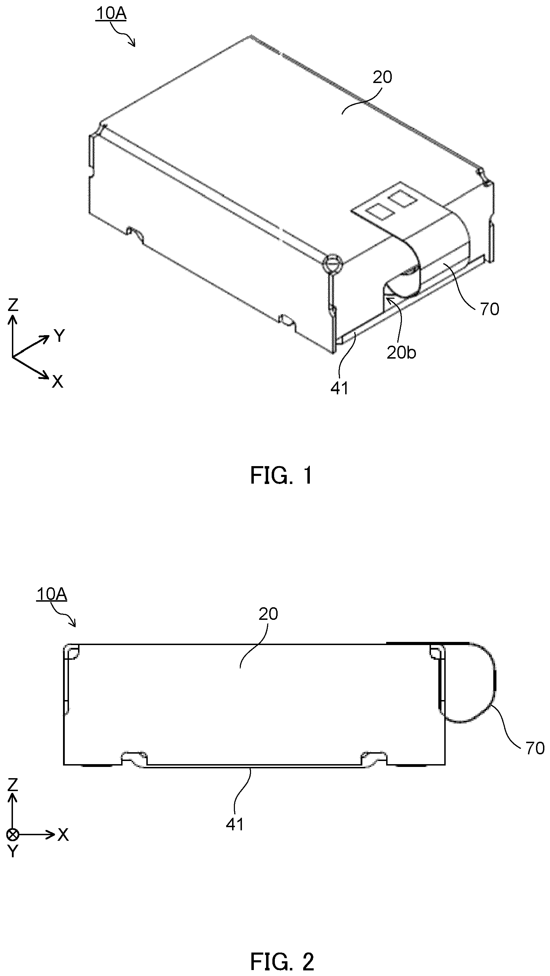

Vibration actuator 10A according to the present embodiment will be described with reference to FIGS. 1 to 5.

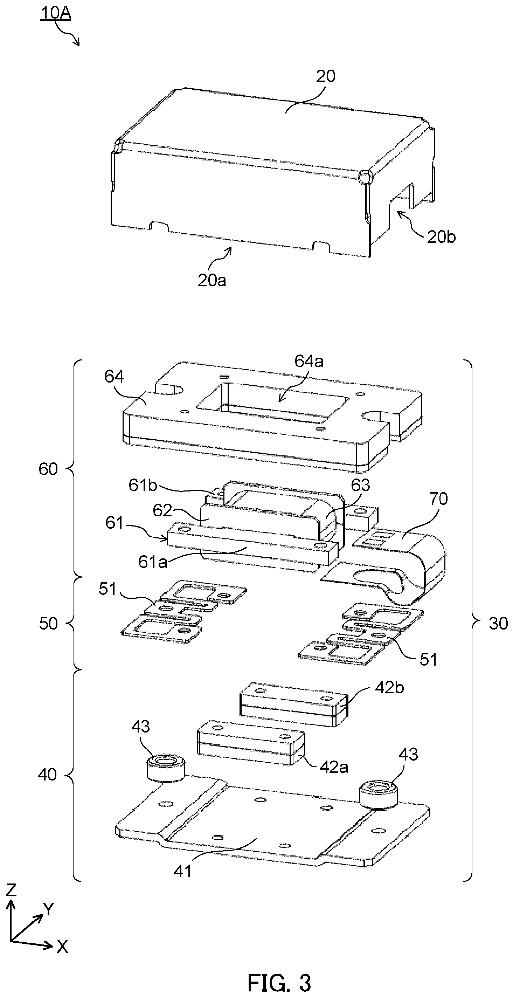

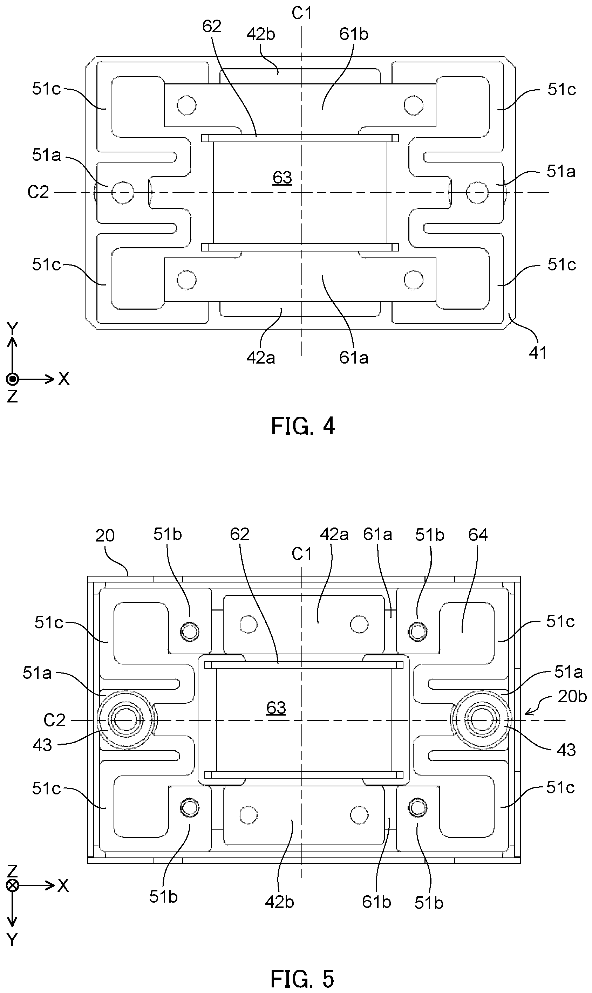

FIG. 1 is an external perspective view of vibration actuator 10A according to the present embodiment. FIG. 2 is an external side view of vibration actuator 10A. FIG. 3 is an exploded perspective view of vibration actuator 10A. FIG. 4 is a top view of vibration actuator 10A, illustrating a configuration in which cover 20 and weight 64 are removed from vibration actuator 10A. FIG. 5 is a bottom view of vibration actuator 10A, illustrating a configuration in which magnetic base 41 is removed from vibration actuator 10A.

Vibration actuator 10A is used, for example, as a vibration presentation apparatus in a contact-type input device (for example, a trackpad or the like) that is operation equipment to be subjected to a contact operation by an operator, and presents vibration to the operator through an operation surface (vibration presentation part).

Vibration actuator 10A vibrates the operation surface of the operation equipment as described above, therefore can impart a contact operation feeling (also referred to as "haptic feeling" or "force sensation") to an operator who operates the operation surface by contacting the operation surface in accordance with the application or the usage situation of the operation equipment.

In the present embodiment, vibration actuator 10A is a box-shaped vibration actuator that accommodates a below-described actuator main body 30 inside a below-described cover 20.

Vibration actuator 10A includes cover 20 and actuator main body 30. Actuator main body 30 includes base part 40, elastic part 50, movable part 60, and wiring part 70 (see FIG. 3 in particular).

Cover 20 (a part of the housing in the present invention) is a box-shaped member with opening portion 20a on its lower side. Here, cover 20 has a substantially rectangular parallelepiped shape as an example. To opening portion 20a, a below-described magnetic base 41 (a part of the housing in the present invention) is attached, and actuator main body 30 is accommodated in the inside surrounded by cover 20 and magnetic base 41. Notch portion 20b is formed on one side surface of cover 20, and wiring part 70 can be installed from the inside to the outside of cover 20 through notch portion 20b.

By accommodating actuator main body 30 inside cover 20 and magnetic base 41, it is possible to prevent external interference with actuator main body 30, thereby protecting actuator main body 30. This is particularly effective when vibration actuator 10A is mounted on a product.

Base part 40 includes magnetic base 41, magnetic yokes 42a and 42b, and spacers 43.

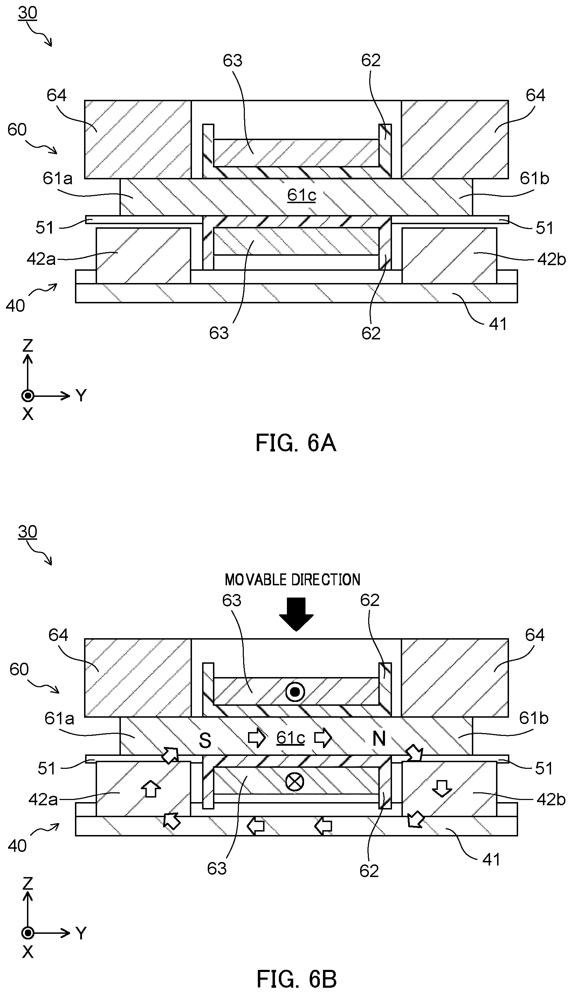

Magnetic base 41 forms a housing together with cover 20 described above, and is a member that covers opening portion 20a. Here, magnetic base 41 is a plate-shaped member having a rectangular shape in a plan view, corresponding to the shape of opening portion 20a. Magnetic base 41 is made of a magnetic body, and is composed of, for example, a silicon steel plate or an electrogalvanized steel sheet (SECC). As will described in FIG. 6B, magnetic base 41 forms a magnetic circuit in an excitation state.

Magnetic yokes 42a and 42b are members each extending in the X-direction and are attached to the upper surface of magnetic base 41. Magnetic yokes 42a and 42b respectively correspond to two core magnetic poles 61a and 61b of magnetic core 61 described below, and are disposed to respectively face core magnetic poles 61a and 61b in the Z-direction with gaps (air gap) therebetween. Magnetic yokes 42a and 42b are also made of a magnetic body, and are composed of, for example, a silicon steel plate or an electrogalvanized steel sheet (SECC). Magnetic yokes 42a and 42b also form a magnetic circuit in the excitation state, as described in FIG. 6B.

Magnetic base 41 and magnetic yokes 42a and 42b described above can be made of magnetic sheet metals. Therefore, magnetic base 41 and magnetic yokes 42a and 42b can be formed by stacking the sheet metals, which can be easily assembled, thereby reducing the costs of processing and assembly.

Spacer 43 is a member that adjusts the position of elastic part 50 in the Z-direction to form the gap described above. Further, by adjusting the thickness (height in the Z direction) of spacer 43, it is possible to adjust the plate thickness of a below-described spring 51 without changing the height of vibration actuator 10A.

Spacers 43 are respectively disposed at both ends of magnetic base 41 in the X-direction and are disposed at the center of magnetic base 41 in the Y-direction. Elastic part 50 is attached to magnetic base 41 via spacers 43.

Elastic part 50 is composed of a pair of springs 51 having a line-symmetrical shape with respect to center line C1 of vibration actuator 10A along the Y-direction (see FIGS. 4 and 5). Springs 51 are respectively disposed at both ends of movable part 60 (magnetic core 61) in a direction orthogonal to the winding axis of coil 63.

When springs 51 are disposed in regions where core magnetic poles 61a and 61b and magnetic yokes 42a and 42b facing core magnetic poles 61a and 61b are disposed, the size of actuator main body 30 would increase. Therefore, springs 51 are herein disposed at both ends of movable part 60 (magnetic core 61) in the direction orthogonal to the winding axis of coil 63. Specifically, the space between core magnetic pole 61a and core magnetic pole 61b is effectively utilized, and spring 51 having a meandering shape is disposed in this space. Thus, it is possible to achieve miniaturization of actuator main body 30 and, consequently, vibration actuator 10A.

In elastic part 50, each spring 51 is a leaf spring formed of a flat or thin elastic member, for example, a sheet metal, and includes first connection portion 51a, second connection portions 51b, and arms 51c (see FIGS. 4 and 5).

First connection portion 51a is a portion that is disposed at the center of spring 51 in the Y-direction and is connected to magnetic base 41 via spacer 43.

Second connection portions 51b are portions that are disposed at both ends of spring 51 in the Y-direction and are connected to the end portions of core magnetic poles 61a and 61b, respectively.

That is, in the Y-direction, first connection portion 51a is fixed to magnetic base 41 via spacer 43 at the center of spring 51, and second connection portions 51b are fixed to the end portions of core magnetic poles 61a and 61b at both ends of spring 51, respectively.

Arms 51c extend from first connection portion 51a at the center of spring 51 to corresponding second connection portions 51b at both ends and elastically deform when movable part 60 is displaced (vibrates).

Two arms 51c are formed in a line-symmetrical shape with respect to center line C2 that penetrates first connection portion 51a in the X direction (see FIGS. 4 and 5). Here, as an example, arm 51c is formed in a so-called meandering shape such that from first connection portion 51a to second connection portion 51b, arm 51c extends inward in the X direction, extends outward in the Y direction, extends outward in the X direction, extends outward in the Y direction, and extends inward in the X direction. That is, arm 51c has a shape that is bent or curved at more than one location.

The pair of springs 51 has a line-symmetrical shape with respect to center line C1, and each spring 51 has a line-symmetrical shape with respect to center line C2. Therefore, the pair of springs 51 can elastically support movable part 60 in a well-balanced manner, enabling stable displacement.

Further, by forming arm 51c in a meandering shape, it is possible to increase the length of arm 51c (spring 51) and relax the stress accompanying the elastic deformation, thereby providing spring 51 with high reliability.

Further, by forming arm 51c in a meandering shape, it is possible to set the length of elastically deformable arm 51c to a desired length even when there is a limitation on the width or length of entire elastic part 50. By setting the length or the plate thickness of arm 51c (spring 51) to desired values, it is possible to set the vibration of movable part 60 to a desired resonance frequency.

Further, by forming arm 51c in a meandering shape, it is possible to place spring 51 without occupying a large space inside cover 20, thereby achieving miniaturization of vibration actuator 10A.

With the pair of springs 51 in this configuration, movable part 60 is supported so that movable part 60 can elastically vibrate with respect to base part 40.

Movable part 60 includes magnetic core 61, bobbin 62, coil 63, and weight 64.

Magnetic core 61 is made of a magnetic body, and is composed of, for example, a silicon steel plate or an electrogalvanized steel sheet (SECC). Magnetic core 61 is formed in an H shape in a plan view, and includes core magnetic poles 61a and 61b, and core main body 61c (see FIGS. 6A and 6B described below).

Core magnetic poles 61a and 61b protrude from the coil at both end portions of core main body 61c in the longitudinal direction (Y-direction), and each extend in a direction (X-direction) orthogonal to the longitudinal direction (Y-direction) of core main body 61c. Further, core magnetic poles 61a and 61b are respectively disposed to face magnetic yokes 42a and 42b with a gap between the pole and yoke in the Z-direction. Core magnetic poles 61a and 61b become magnetic poles during excitation (when coil 63 is energized).

Core main body 61c connects between central portions of core magnetic poles 61a and 61b (each of which extending in the X-direction). Coil 63 is wound around core main body 61c via bobbin 62. Core main body 61c serves as the winding axis of coil 63, and core magnetic poles 61a and 61b are disposed at both ends of the core main body.

As magnetic core 61 has an H shape as described above, the length of core magnetic poles 61a and 61b in the X direction can be made longer than the length of core main body 61c (on which coil 63 is wound) in the X direction, thereby reducing the magnetic resistance and improving the efficiency of the magnetic circuit.

Bobbin 62 is disposed on the outer periphery of core main body 61c (see FIGS. 6A and 6B). Bobbin 62 has flanges (reference numeral thereof is omitted) at both ends, and coil 63 is wound between the flanges at both ends. Bobbin 62 is formed of an insulating resin material, so that electrical insulation is provided to coil 63, thereby improving the reliability as an electric circuit.

Coil 63 is a solenoid with a winding wound around the outer periphery of bobbin 62. When coil 63 is energized, it generates a magnetic field, forms a magnetic circuit as described below (see FIG. 6B), and displaces and vibrates movable part 60 with respect to base part 40.

Weight 64 functions as a weight that promotes the vibration of movable part 60. Weight 64 is preferably made of a high-density material.

Weight 64 is formed to correspond to the shape, size, and the like of magnetic core 61, bobbin 62, and coil 63. For example, in a plan view, through-hole 64a is formed at the center of weight 64, and the upper sides of bobbin 62 and coil 63 are accommodated in through-hole 64a. Thus, it is possible to reduce the height (thickness) of movable part 60 in the Z-direction compared to a case where through-hole 64a is not provided, and to miniaturize vibration actuator 10A.

Herein, a configuration of a moving coil type in which coil 63 side is moved is employed, and together with weight 64 described above, magnetic core 61 and coil 63 also function as a weight that promotes the vibration of movable part 60. That is, the weight of movable part 60 can be increased. Therefore, even when vibration actuator 10A is miniaturized or actuator main body 30 is accommodated in the housing (cover 20 and magnetic base 41), it is possible to increase the output due to vibration and to generate a vibration that provides a desired haptic feeling.

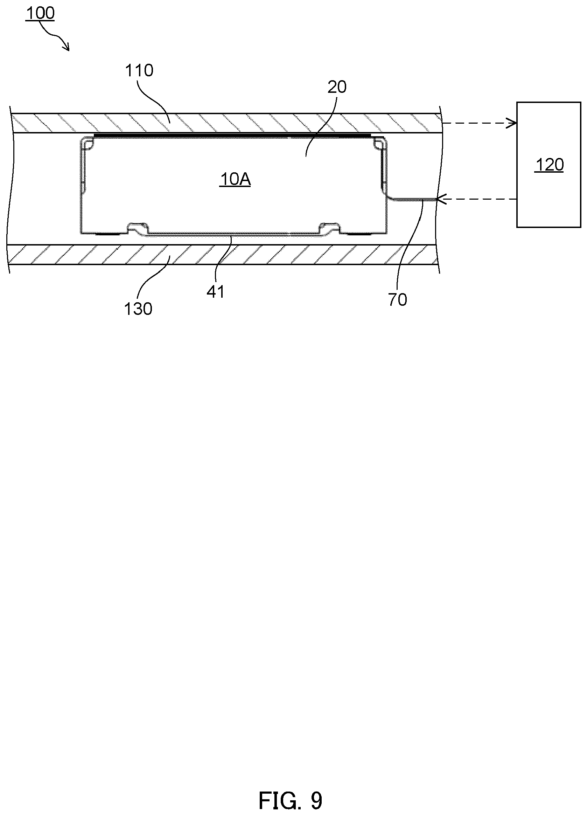

Wiring part 70 is a wire that electrically connects coil 63 with a control apparatus (for example, control apparatus 130 illustrated in FIG. 9 to be described below) outside vibration actuator 10A. Wiring part 70 is formed of, for example, a flexible printed circuit (FPC), and performs energization from the control apparatus to coil 63 via the FPC.

Base part 40, elastic part 50, and movable part 60 described above are disposed to be accommodated in the housing, that is, in a space formed by cover 20 and magnetic base 41.

### [Behavior of Vibration Actuator]

FIG. 6A illustrates the behavior of actuator main body 30, illustrating a non-excitation state. FIG. 6B illustrates the behavior of actuator main body 30, illustrating the excitation state. FIGS. 6A and 6B are cross-sectional views of actuator main body 30 cut along the Y-direction near the center of the actuator main body 30 in the X-direction.

In an initial state in which the energization of coil 63 of actuator main body 30 has not been started, magnetic core 61 is in a non-excitation state. Movable part 60 is supported by magnetic base 41 via springs 51 at a position (position in a stationary state) where the elastic force of springs 51 and the weight of movable part 60 (magnetic core 61, bobbin 62, coil 63, and weight 64) are balanced.

When a current flows through coil 63 of actuator main body 30, magnetic core 61 is excited, a magnetic field is generated, and core magnetic poles 61a and 61b at both ends of magnetic core 61 become magnetic poles. For example, when a current flows in coil 63 in the direction illustrated in FIG. 6B, core magnetic pole 61a becomes an S pole, core magnetic pole 61b becomes an N pole, and a flow of magnetic flux (magnetic circuit) indicated by the white arrows with black outline is formed in magnetic core 61, magnetic base 41, and magnetic yokes 42a and 42b.

The flow of the magnetic flux in the magnetic circuit flows from core magnetic pole 61b to the opposing magnetic yoke 42b, reaches magnetic yoke 42a via magnetic base 41, flows from magnetic yoke 42a to the opposing core magnetic pole 61a, and reaches core magnetic pole 61b via core main body 61c.

In core magnetic poles 61a and 61b, a magnetic attraction force is generated in a direction orthogonal to the winding axis of coil 63 based on the principle of an electromagnetic solenoid. Due to this magnetic attraction force, core magnetic poles 61a and 61b and magnetic yokes 42a and 42b are attracted to each other.

Here, as an example, magnetic base 41 is on the fixed side, and movable part 60 is movably supported by magnetic base 41 via springs 51. Therefore, springs 51 are elastically deformed, core magnetic poles 61a and 61b are attracted toward magnetic yokes 42a and 42b, and movable part 60 moves downward (to the negative side in Z-direction) as indicated by the black arrow.

After core magnetic poles 61a and 61b are attracted toward magnetic yokes 42a and 42b, when the energization of coil 63 is stopped, the magnetic field disappears, the magnetic attraction force is lost, and the biasing force of springs 51, which have been elastically deformed on the magnetic base 41 side, is released. That is, the reaction force of springs 51 is generated. The reaction force causes movable part 60 to move upward (to the positive side in Z-direction) to return to the position (reference position) in the initial state illustrated in FIG. 6A. At this time, movable part 60 moves to a position farther away from magnetic base 41 than the position (reference position) in the initial state is due to the reaction force of spring 51, generating strong vibration. This vibration is repeated as free vibration while attenuating the amplitude as the biasing force of spring 51 attenuates.

By repeating the energization and de-energization of coil 63, it is possible to move movable part 60 in the Z-direction and generate vibration in the Z-direction, namely the vibration direction. Further, by controlling the timing of energization and de-energization of coil 63, it is possible to increase or decrease the duration of the vibration attenuation period. By generating such vibrations, a haptic feeling is generated and imparted to the operator.

### [Drive Circuit of Vibration Actuator]

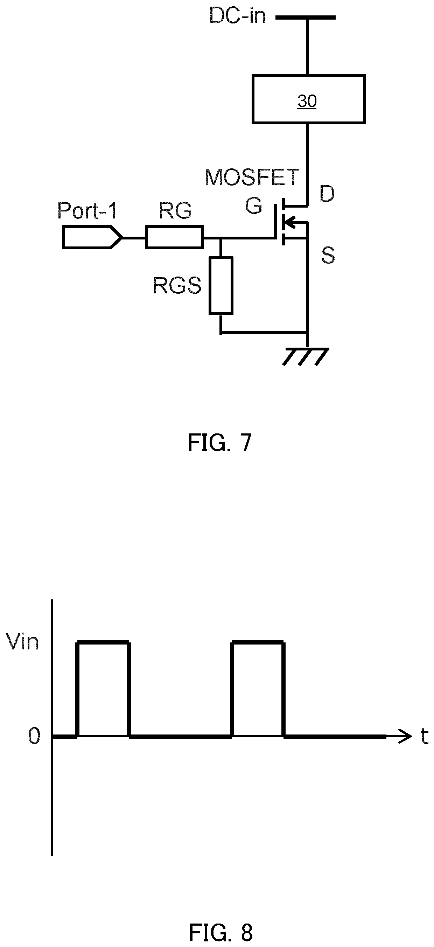

FIG. 7 illustrates an example of a drive circuit that drives actuator main body 30. FIG. 8 illustrates an example of the voltage supplied from the drive circuit illustrated in FIG. 7 to actuator main body 30.

Actuator main body 30 of vibration actuator 10Ais controlled by an external control apparatus (control part in the present invention, for example, control apparatus 130 illustrated in FIG. 9) via wiring part 70. The control apparatus includes the drive circuit illustrated in FIG. 7, which causes the movable part 60 to vibrate, thereby presenting a haptic feeling to the operator.

The drive circuit includes a metal-oxide-semiconductor field-effect transistor (MOSFET) and resistors RG and RGS.

The MOSFET is a switching element that supplies a current pulse to actuator main body 30. The drive signal voltage from the control apparatus is input from port 1 and is input to gate G of the MOSFET via resistor RG. Drain D of the MOSFET is connected to actuator main body 30, and source S is grounded. Further, a direct current voltage DC is applied to actuator main body 30 from a power source part (not illustrated).

The MOSFET is turned on and off by a drive signal voltage from the control apparatus, for example, the drive signal voltage of the rectangular wave illustrated in FIG. 8, and when the MOSFET is turned on, a current flows and coil 63 of actuator main body 30 is energized. In FIG. 8, a rectangular wave is illustrated as an example, but the drive signal voltage is not limited to a rectangular wave, and a sine wave, a sawtooth wave, or the like may be used.

The control apparatus includes, although not illustrated, a central processing unit (CPU), a read only memory (ROM), a random access memory (RAM), a storage part, and the like. The CPU reads a program and data corresponding to the processing content from the ROM, and generates a drive signal voltage based on the program, data, and other information.

### [Configuration of Contact-Type Input Device]

FIG. 9 illustrates an example of contact-type input device 100 including vibration actuator 10A.

Contact-type input device 100 is, for example, a trackpad used as a pointing device instead of a mouse in a notebook computer or the like. The trackpad is disposed in a rectangular frame portion provided in housing 130 of a notebook computer or the like.

The trackpad includes a plate-shaped pad main body 110 that is subjected to a contact operation with a finger, vibration actuator 10A disposed on the back surface of pad main body 110, control apparatus 120 that controls vibration actuator 10A, and the like. Control apparatus 120 acquires information on the contact operation from pad main body 110.

When a contact operation such as tracing or tapping pad main body 110 with a finger is performed, vibration actuator 10A applies a vibration that serves as a haptic feeling to the trackpad. Specifically, control apparatus 120 supplies a drive signal voltage to coil 63 of vibration actuator 10A in response to the contact operation of the operator on pad main body 110 serving as an operation surface, displaces movable part 60 downward, starts the vibration, and presents the haptic feeling to the operator.

For example, pad main body 110 is fixed to cover 20 of vibration actuator 10A on the back surface side of the central portion of pad main body 110 with the use of double-sided tape or the like. The outer peripheral portion of pad main body 110 is movably attached to a frame portion provided in housing 130 of a notebook computer or the like via a buffer member.

Herein, cover 20 is attached to pad main body 110, but magnetic base 41 may be attached to pad main body 110.

The fixing method of vibration actuator 10A described above is a suspension method in which one of cover 20 and magnetic base 41 is fixed to pad main body 110, and the other one of cover 20 and magnetic base 41 is not fixed. In such a fixed state, one of cover 20 and magnetic base 41 is vibrated with respect to the other one of cover 20 and magnetic base 41, so that the vibration is indirectly transmitted to pad main body 110.

Vibration actuator 10A may be fixed, for example, by a fixing method in which one of cover 20 and magnetic base 41 is fixed to pad main body 110 and the other one of cover 20 and magnetic base 41 is fixed to housing 130. In this case, housing 130 is also vibrated, in addition to pad main body 110.

Further, although contact-type input device 100 including vibration actuator 10A has been illustrated here, contact-type input device 100 may have a configuration including vibration actuator 10B described below.

### [Summary]

As described above, vibration actuator 10A includes base part 40 made of a magnetic body, elastic part 50, and movable part 60 including magnetic core 61, coil 63, and weight 64. In addition, vibration actuator 10A includes cover 20 that accommodates elastic part 50 and movable part 60 between base part 40 and cover 20, and forms a housing together with base part 40.

With the above-described configuration, actuator main body 30 is accommodated inside the housing (cover 20 and magnetic base 41), making it easier to mount vibration actuator 10A on a product, improving mountability.

Further, when the housing (cover 20 and magnetic base 41) has a rectangular parallelepiped shape, each surface of the housing can be attached to the product except for the surface on which wiring part 70 is disposed, and thus, the layout property of vibration actuator 10A with respect to the product is improved. Further, by changing the attachment surface in the housing, the vibration direction of vibration actuator 10A can also be changed.

Further, actuator main body 30 is a moving coil type, and movable part 60 includes weight 64; therefore, together with weight 64, magnetic core 61 and coil 63 also function as a weight that promotes the vibration of movable part 60. Therefore, even when vibration actuator 10A is miniaturized, or actuator main body 30 is accommodated in the housing (cover 20 and magnetic base 41), it is possible to achieve high output of vibration and to generate vibration that provides a desired haptic feeling.

That is, vibration actuator 10A of the present embodiment can improve the mountability to a product and provide an operator with a satisfactory haptic feeling.

Further, vibration actuator 10A can be miniaturized, and contact-type input device 100 can also be miniaturized, thereby improving the degree of freedom in design and enhancing the design quality.

### <Variation 1>

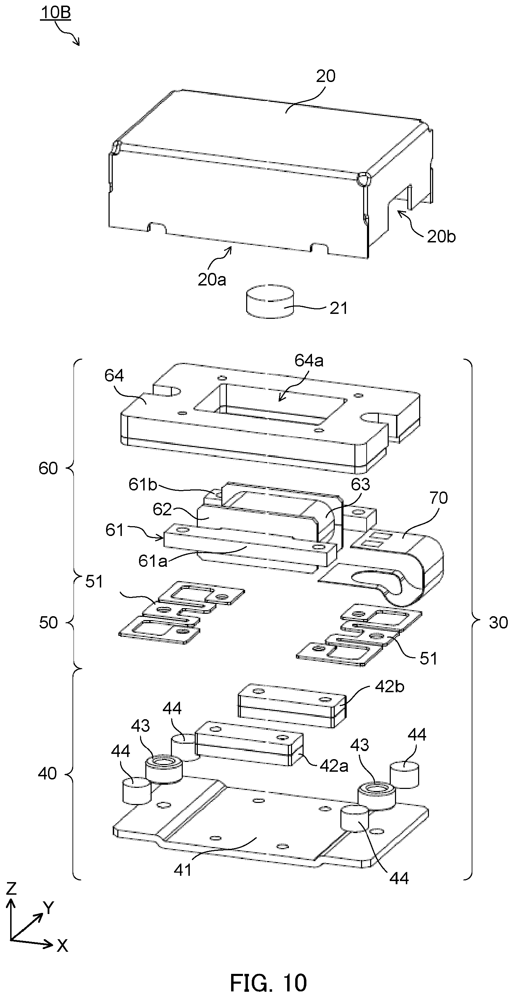

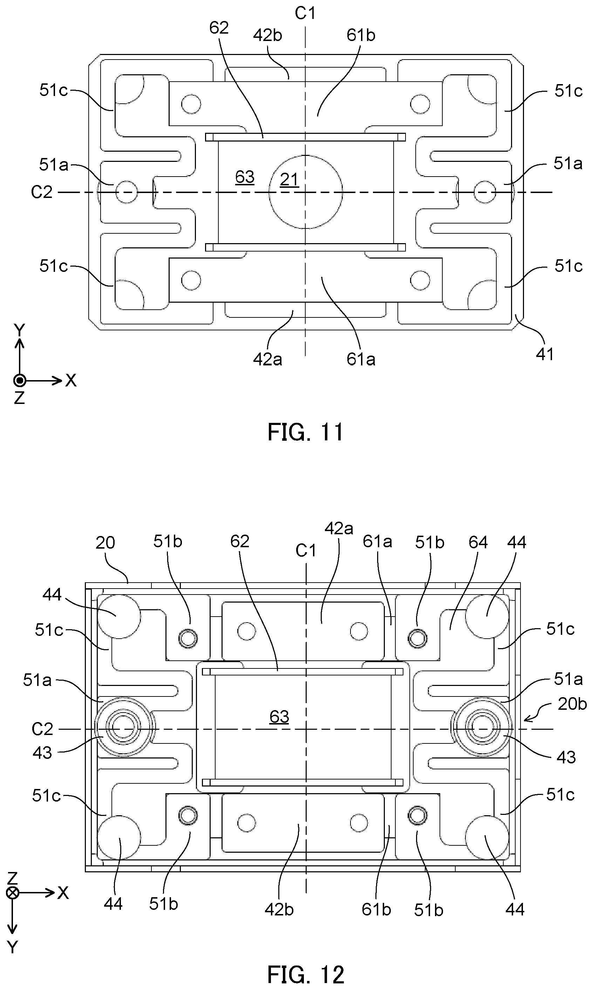

FIG. 10 is an exploded perspective view illustrating vibration actuator 10B, which is a variation of vibration actuator 10A. FIG. 11 is a top view of vibration actuator 10B. FIG. 12 is a bottom view of vibration actuator 10B.

Vibration actuator 10B has the same configuration as vibration actuator 10A, except that vibration actuator 10B further includes dampers 21 and 44. Accordingly, in vibration actuator 10B, the same reference numerals are given to the same components as those in vibration actuator 10A, and the description that coincide with that of vibration actuator 10A is omitted, and the differences will be mainly described.

Vibration actuator 10B further includes damper 21. Damper 21 is attached to the inner wall side of cover 20 or the upper side of coil 63. Although one damper 21 is disposed in the present variation, a plurality of dampers 21 may be disposed. In that case, a plurality of dampers 21 are disposed symmetrically with respect to center lines C1 and C2 described above (see FIGS. 4 and 5).

Damper 21 (suppression member in the present invention) serves as a hard stop for movable part 60, which moves to the positive side in Z-direction, and can suppress the displacement amount of movable part 60. For example, when movable part 60 is displaced to the positive side in Z-direction more than necessary due to a strong impact such as a fall, damper 21 can prevent the displacement more than necessary.

Further, damper 21 is made of a material having low elasticity and damping properties, for example, silicone gel. When damper 21 is made of a high-rigidity material, there is a concern about a knocking sound when damper 21 comes into contact with movable part 60. However, by using damper 21 made of a material with low elasticity and damping properties, it is possible to prevent the knocking sound. Further, as damper 21 provides the vibration of movable part 60 with damping properties, it is possible to suppress residual vibration and achieve a sharp haptic feeling.

Base part 40 further includes a plurality of dampers 44. In the present variation, base part 40 includes four dampers 44, and four dampers 44 are disposed at both ends of magnetic base 41 in the X-direction and at both ends of magnetic base 41 in the Y-direction, respectively. That is, the four dampers 44 are symmetrically disposed with respect to the above-described center lines C1 and C2 (see FIGS. 4 and 5).

Four dampers 44 are configured so as to be able to contact springs 51 having elastically deformed and displaced to the negative side in Z-direction. Further, damper 44 is also made of a material having low elasticity and damping properties, for example, silicone gel. By damper 44 contacting spring 51, it is possible to improve the haptic feeling caused by the vibration of movable part 60, provide the vibration of movable part 60 with damping properties, suppress residual vibration, and achieve a sharp haptic feeling.

The above describes the embodiment of the present invention. The above description is an example of a preferred embodiment of the present invention, and the scope of the present invention is only limited by the appended claims.

### Industrial Applicability

The vibration actuator and the contact-type input device according to the present invention have effects of improving assemblability, being miniaturized, and being capable of vibrating suitably, and are useful as a vibration presentation apparatus for a contact-type input device such as a trackpad or an operation panel. Further, the vibration actuator according to the present invention is not limited to a contact-type input device, but is also useful as a vibration presentation apparatus that vibrates an attached target, such as a housing of an apparatus.

### Reference Signs List

10A, 10B Vibration actuator
20 Cover
21 Damper
30 Actuator main body
40 Base part
41 Magnetic base
42a, 42b Magnetic yoke
43 Spacer
44 Damper
50 Elastic part
51 Spring
60 Movable part
61 Magnetic core
62 Bobbin
63 Coil
64 Weight
70 Wiring part
100 Contact-type input device
110 Pad main body
120 Control apparatus

## Claims

1. A vibration actuator, comprising:
a movable part that includes a coil, a core including both end portions protruding from the coil, and a weight fixed to the core, wherein the coil is wound around the core;
a base part made of a magnetic body, the base part including yokes respectively facing the both end portions;
at least one elastic part that supports the movable part in an elastically vibratable manner with respect to the base part; and
a cover that accommodates the movable part and the at least one elastic part between the cover and the base part and forms a housing together with the base part,
wherein
a magnetic attraction force generated by energization of the coil displaces the movable part toward the base part to vibrate the movable part, and
the base part includes a spacer that forms a gap between each of the both end portions and a corresponding one of the yokes, **characterized in that**
the at least one elastic part includes a first connection portion and a second connection portion,
the first connection portion is connected to the base part via the spacer, and
the second connection portion is connected to the movable part.

2. The vibration actuator according to claim 1, wherein
the at least one elastic part is formed of a leaf spring and has a shape that is bent or curved at more than one location.

3. The vibration actuator according to claim 1, wherein
the at least one elastic part includes a plurality of elastic parts, the elastic parts are respectively disposed at both ends of the movable part in a direction orthogonal to a winding axis of the coil.

4. The vibration actuator according to claim 3, wherein
each of the elastic parts includes a pair of leaf springs having a line-symmetrical shape with respect to a line along the winding axis.

5. The vibration actuator according to claim 1, wherein
the base part includes, disposed thereon, a damper configured to contact a portion of the at least one elastic part, the portion being displaced together with the movable part.

6. The vibration actuator according to claim 1, further comprising:
a suppression member that suppresses displacement of the movable part toward the cover.

7. The vibration actuator according to claim 6, wherein
the suppression member is made of a material having low elasticity and damping property.

8. The vibration actuator according to claim 1, wherein
the yokes and the base part are each formed of stacked magnetic sheet metals.

9. A contact-type input device in which the vibration actuator according to claim 1 is disposed on a back surface of an operation surface of the contact-type input device, the contact-type input device comprising:
a control part that, in response to a contact operation of an operator on the operation surface, causes the coil to be energized to vibrate the movable part and present a haptic feeling to the operator.

## Patentansprüche

1. Vibrationsaktuator, umfassend:
einen beweglichen Teil, beinhaltend eine Spule, einen Kern, der beide von der Spule vorstehenden Endabschnitte beinhaltet, und ein an dem Kern befestigtes Gewicht, wobei die Spule um den Kern gewickelt ist;
einen Basisteil, der aus einem magnetischen Körper hergestellt ist, wobei der Basisteil Joche beinhaltet, die jeweils den beiden Endabschnitten zugewandt sind;
mindestens einen elastischen Teil, der den beweglichen Teil in Bezug auf den Basisteil elastisch vibrationsfähig lagert; und
eine Abdeckung, die den beweglichen Teil und den mindestens einen elastischen Teil zwischen der Abdeckung und dem Basisteil aufnimmt und zusammen mit dem Basisteil ein Gehäuse bildet,
wobei
eine durch Energiebeaufschlagung der Spule generierte magnetische Anziehungskraft den beweglichen Teil in Richtung des Basisteils verschiebt, um den beweglichen Teil in Vibrationen zu versetzen, und
der Basisteil einen Abstandhalter beinhaltet, der einen Spalt zwischen jedem der beiden Endabschnitte und einem entsprechenden der Joche bildet, **dadurch gekennzeichnet, dass**
der mindestens eine elastische Teil einen ersten Verbindungsabschnitt und einen zweiten Verbindungsabschnitt beinhaltet,
der erste Verbindungsabschnitt über den Abstandhalter mit dem Basisteil verbunden ist, und
der zweite Verbindungsabschnitt mit dem beweglichen Teil verbunden ist.

2. Vibrationsaktuator nach Anspruch 1, wobei
der mindestens eine elastische Teil aus einer Blattfeder gebildet ist und eine Form aufweist, die an mehr als einer Stelle gebogen oder gekrümmt ist.

3. Vibrationsaktuator nach Anspruch 1, wobei
der mindestens eine elastische Teil mehrere elastische Teile beinhaltet, wobei die elastischen Teile jeweils an beiden Enden des beweglichen Teils in einer Richtung orthogonal zu einer Wickelachse der Spule angeordnet sind.

4. Vibrationsaktuator nach Anspruch 3, wobei
jeder der elastischen Teile ein Paar Blattfedern beinhaltet, die eine liniensymmetrische Form in Bezug auf eine Linie entlang der Wickelachse aufweisen.

5. Vibrationsaktuator nach Anspruch 1, wobei
der Basisteil einen darauf angeordneten Dämpfer beinhaltet, der dazu eingerichtet ist, einen Abschnitt des mindestens einen elastischen Teils zu kontaktieren, wobei der Abschnitt zusammen mit dem beweglichen Teil verschoben wird.

6. Vibrationsaktuator nach Anspruch 1, des Weiteren umfassend:
ein Unterdrückungselement, das eine Verschiebung des beweglichen Teils in Richtung der Abdeckung unterdrückt.

7. Vibrationsaktuator nach Anspruch 6, wobei
das Unterdrückungselement aus einem Material hergestellt ist, das geringe Elastizität und ein geringes Dämpfungsvermögen aufweist.

8. Vibrationsaktuator nach Anspruch 1, wobei
die Joche und der Basisteil jeweils aus übereinandergelegten magnetischen Blechen gebildet sind.

9. Eingabevorrichtung vom Kontakttyp, wobei der Vibrationsaktuator nach Anspruch 1 auf einer Rückseite einer Bedienoberfläche des Eingabevorrichtung vom Kontakttyp angeordnet ist, wobei die Eingabevorrichtung vom Kontakttyp umfasst:
einen Steuerteil, der in Reaktion auf eine Kontaktoperation eines Bedieners auf der Bedienoberfläche veranlasst, dass die Spule mit Energie beaufschlagt wird, um den beweglichen Teil in Vibrationen zu versetzen und dem Bediener ein haptisches Gefühl zu vermitteln.

## Revendications

1. Actionneur de vibration, comprenant :
une partie mobile qui inclut une bobine, un noyau incluant les deux portions d'extrémité faisant saillie de la bobine, et un poids fixé au noyau, dans lequel la bobine est enroulée autour du noyau ;
une partie de base constituée d'un corps magnétique, la partie de base incluant des culasses faisant face respectivement aux deux portions d'extrémité ;
au moins une partie élastique qui supporte la partie mobile de manière élastiquement vibratoire par rapport à la partie de base ; et
un couvercle qui accueille la partie mobile et ladite au moins une partie élastique entre le couvercle et la partie de base et forme un boîtier conjointement à la partie de base,
dans lequel
une force d'attraction magnétique générée par l'alimentation de la bobine déplace la partie mobile vers la partie de base pour faire vibrer la partie mobile, et
la partie de base inclut une entretoise qui forme un intervalle entre chacune des deux portions d'extrémité et une culasse correspondante desdites culasses, **caractérisé en ce que**
ladite au moins une partie élastique inclut une première portion de connexion et une deuxième portion de connexion,
la première portion de connexion est connectée à la partie de base via l'entretoise, et
la deuxième portion de connexion est connectée à la partie mobile.

2. Actionneur de vibration selon la revendication 1, dans lequel
ladite au moins une partie élastique est constituée d'un ressort à lame et présente une forme pliée ou incurvée à plusieurs endroits.

3. Actionneur de vibration selon la revendication 1, dans lequel
ladite au moins une partie élastique inclut une pluralité de parties élastiques, les parties élastiques étant disposées respectivement aux deux extrémités de la partie mobile dans une direction orthogonale à un axe d'enroulement de la bobine.

4. Actionneur de vibration selon la revendication 3, dans lequel
chacune des parties élastiques inclut une paire de ressorts à lame ayant une forme symétrique par rapport à une ligne qui suit l'axe d'enroulement.

5. Actionneur de vibration selon la revendication 1, dans lequel
la partie de base inclut un amortisseur disposé sur celle-ci et configuré pour entrer en contact avec une portion de ladite au moins une partie élastique, ladite portion étant déplacée conjointement à la partie mobile.

6. Actionneur de vibration selon la revendication 1, comprenant en outre :
un élément de suppression qui supprime le déplacement de la partie mobile vers le couvercle.

7. Actionneur de vibration selon la revendication 6, dans lequel
l'élément de suppression est constitué d'un matériau présentant une faible propriété d'élasticité et d'amortissement.

8. Actionneur de vibration selon la revendication 1, dans lequel
les culasses et la partie de base sont constituées chacune de feuilles de métal magnétique empilées.

9. Dispositif d'entrée de type à contact, dans lequel un actionneur de vibration selon la revendication 1 est disposé sur la face arrière d'une surface fonctionnelle du dispositif d'entrée de type à contact, ledit dispositif d'entrée de type à contact comprenant :
une partie de commande qui, en réponse à une action de contact d'un opérateur sur la surface fonctionnelle, commande l'alimentation de la bobine pour faire vibrer la partie mobile et procurer une sensation haptique à l'opérateur.
